# FASCICULE DE BREVET EUROPEEN

(11) **EP 2 724 588 B1**
(45) Date de publication et mention de la délivrance du brevet: **31.07.2019**
(21) Numéro de dépôt: 12738515.1
(22) Date de dépôt: 22.06.2012
(51) Int. Cl.: H04W 74/08, H04W 72/04, H04W 84/12

(54) **PROCÉDÉ DE TRANSMISSION DE PAQUETS DE DONNÉES, STATION, PROGRAMME D'ORDINATEUR ET SUPPORT D'INFORMATIONS CORRESPONDANTS**
VERFAHREN ZUR ÜBERTRAGUNG VON DATENPAKETEN, ENTSPRECHENDE STATION, COMPUTERPROGRAMM UND SPEICHERMEDIUM
METHOD OF TRANSMITTING DATA PACKETS, CORRESPONDING STATION, COMPUTER PROGRAMME AND STORAGE MEDIUM

(30) Priorité: 24.06.2011 FR 1155601
(43) Date de publication de la demande: 30.04.2014
(73) Titulaire: Orange, 75015 Paris (FR)
(72) Inventeur: CARIOU, Laurent, F-35000 Rennes (FR); BERNARD, David, F-35560 Marcille Raoul (FR)
(86) Numéro de dépôt international: PCT/FR2012/051435
(87) Numéro de publication internationale: WO 2012/175891

(56) Documents cités:
- WO-A1-2009/050656
- US-A1- 2004 047 314
- US-A1- 2008 063 106
- SOUVIK SEN ET AL: "Listen (on the frequency domain) before you talk", PROCEEDINGS OF THE 9TH ACM WORKSHOP ON. HOT TOPICS IN NETWORKS. HOTNETS-IX. OCTOBER 20-21, 2010. MONTEREY, CA., 20 October 2010 (2010-10-20), pages 1-6, XP055427942, DOI: 10.1145/1868447.1868463 ISBN: 978-1-4503-0409-2

## Description

### Domaine de l'invention

La présente invention se rapporte au domaine des télécommunications. Au sein de ce domaine, l'invention se rapporte plus particulièrement au domaine des communications par voie radio, également appelées sans fil, qui inclue les réseaux WiFi (Wireless Fidelity selon la terminologie anglo saxonne) dont la standardisation fait l'objet des normes 802.11 et suivantes de l'IEEE. Ces normes garantissent une interopérabilité entre des équipements de communication sans fil conformes à ces normes.

Dans la suite du document, l'appellation WiFi doit être comprise comme couvrant le domaine des communications par voie radio.

L'invention est décrite dans un contexte de réseau WiFi à infrastructure dans lequel des stations établissent des communications au moyen d'un point d'accès (Access Point selon la terminologie anglo saxonne). En fonction du mode de réalisation, l'invention peut tout aussi bien être mise en oeuvre dans un réseau ad hoc.

Plus précisément, l'invention concerne l'évitement de collision entre équipements WiFi et se rapporte plus particulièrement à un mécanisme de transmission de paquets de données pouvant être utilisé dans un système WiFi.

On entend ici par équipement un appareil appartenant à un ensemble de services de base (selon la terminologie anglo saxonne BSS pour « basic service set ») formé par un point d'accès et les stations associées à ce point d'accès, c'est-à-dire les stations situées dans la zone de couverture de ce point d'accès.

### Art antérieur

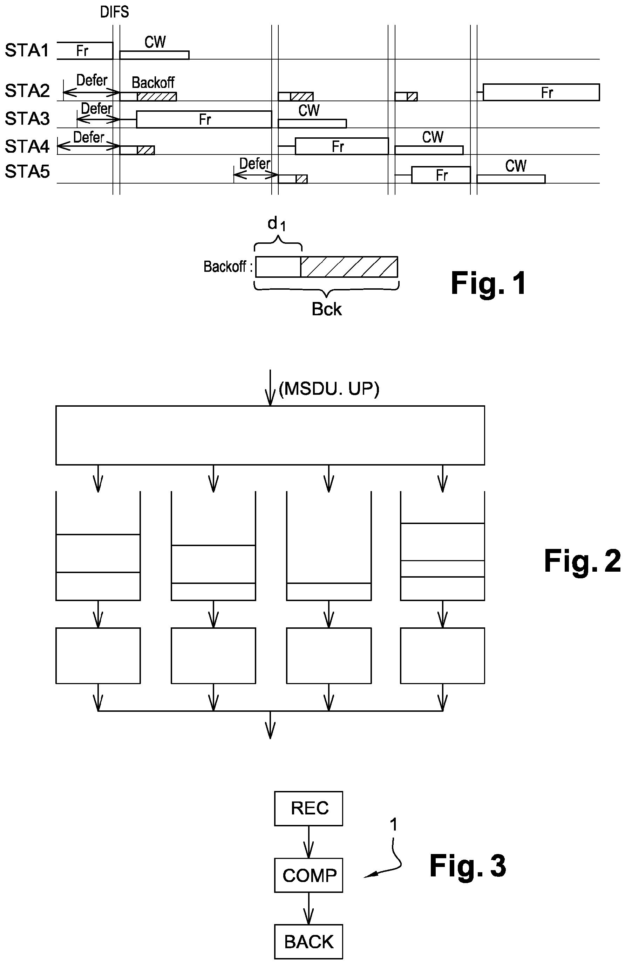

Lorsqu'un équipement WiFi a des données à transmettre, il doit accéder au canal de transmission. L'accès au canal de transmission dans un système Wi-Fi peut être de type CSMA-CA (abréviation des termes anglo saxons « Carrier Sense Multiple Access-Collision Avoidance »), tel qu'introduit et décrit dans la norme 802.11-2007, paragraphe 9.1 « MAC architecture », 9.1.1 « DCF ». Le mécanisme CSMA-CA, illustré en figure 1, assure un partage de l'accès à un canal radiofréquence selon un principe dit de contention : chaque équipement STA1, STA2, STA3, STA4, STA5 doit écouter pour s'assurer que le canal est libre (c'est-à-dire qu'aucun signal n'est émis ou reçu dans ce canal) pendant une durée d'attente « Backoff », avant de transmettre des données. En pratique, pendant la période de contention CW, le point d'accès et chaque station décrémentent d1 leurs compteurs d'attente Bck respectifs associés aux paquets Fr en attente dans leurs files d'attente respectives, en attendant que le canal soit libre.

Le procédé d'accès consiste à initialiser un temps d'attente Bck selon un tirage aléatoire à chaque station pour chaque flux. A chaque période de contention, chaque station écoute le canal pendant la durée restante (Bck-d1) de son compteur d'attente « backoff ».

Si avant la fin de cette durée le canal est occupé, la station suspend le décompte de son compteur et attend une nouvelle période de contention pour reprendre le décompte de son compteur d'attente « backoff ».

Si à la fin de cette durée le canal est libre, la station peut prendre le canal et transmettre.

Il se peut en outre que plusieurs points d'accès Wifi se retrouvent sur les mêmes bandes de fréquence et dans le même environnement spatial. On parle alors d'ensembles de services de base se chevauchant (« overlapping Basic Service Set » selon la terminologie anglo saxonne). Dans ces conditions, un canal radiofréquence, ou une bande de fréquence, doit être partagé entre les différents ensembles de services de base (BSS). Ceci se fait classiquement en utilisant le mode d'accès CSMA-CA tel que décrit précédemment.

Un mode amélioré d'accès, appelé EDCA (abréviation des termes anglo saxons « enhanced distributed channel access »), est défini dans le même standard, chapitre 9 « MAC sublayer functional description », paragraphe 9.9.1 « HCF contention-based channel access (EDCA) » pour les équipements (stations et AP) compatibles d'une gestion de la qualité de service ou QoS (abréviation des termes anglo saxons « Quality Of Service »). Selon ce mode, chaque équipement doit écouter pour s'assurer que le canal est libre (c'est-à-dire qu'aucun signal n'est émis ou reçu dans ce canal) pendant une durée variable, correspondant à une durée inter trame arbitraire appelée AIFS (abréviation des termes anglo saxons « Arbitration InterFrame Space ») pouvant varier en fonction du type de flux et une durée d'attente aléatoire (abréviation des termes anglo saxons « Backoff »), avant de transmettre des données.

La qualité de service selon ce mode est basée sur des périodes de compteur d'attente « backoff » plus courtes pour les flux les plus prioritaires. Ainsi, la priorité des flux est fonction des différentes classes de services. Par exemple, la classe de service voix bénéficie d'une probabilité d'accès au canal plus grande que la classe de service « best effort » du fait que le tirage aléatoire du backoff est effectué par l'équipement dans des intervalles de valeurs différentes en fonction de la classe de service.

La gestion de la QoS selon le mode EDCA fonctionne relativement bien lorsque la charge du système n'est pas trop grande. Toutefois, dès que cette charge augmente, des collisions peuvent apparaître, notamment du fait :
- que la même valeur de backoff peut être tirée aléatoirement par deux stations différentes (elles vont donc accéder au canal au même instant) ou
- que les stations sont des stations cachées (qui ne peuvent détecter le signal de l'autre station).

Lorsqu'une collision se produit entre deux stations, la solution connue consiste à augmenter les valeurs possibles des backoff (par doublement des valeurs des bornes des intervalles pouvant être sélectionnés, mécanisme appelé « exponential Backoff»), afin de réduire la probabilité de collision. Ceci à l'inconvénient d'augmenter le temps d'accès au canal, et donc la gigue, ce qui pénalise la qualité de service.

L'article de Souvik Sen et al « Listen (on the frequency domain) before you talk », XP055427942, décrit un procédé selon lequel des nouvelles valeurs de backoff sont déterminées de manière aléatoire par chacune des stations ayant une même valeur de backoff.

### Exposé de l'invention

L'invention a pour objet un procédé selon la revendication 1, une station selon la revendication 7, un programme d'ordinateur selon la revendication 9 et un support d'informations selon la revendication 10. Des modes de réalisation préférés sont décrits pour les revendications dépendantes. Il est proposé une solution nouvelle avantageuse, sous la forme d'un procédé de transmission de paquets de données destiné à un réseau d'accès avec partage d'un canal multi bandes entre stations, une première bande étant dite de transmission, une deuxième bande étant dite de signalisation, l'accès au canal par une station pour transmettre des données d'un flux s'effectuant après le décompte par un compteur d'une valeur d'attente (backoff).

Ainsi, il est proposé un procédé de transmission de paquets de données destiné à un réseau d'accès avec partage d'un canal multi bandes entre stations, une première bande étant dite de transmission, une deuxième bande étant dite de signalisation, l'accès au canal par une station pour transmettre des données d'un flux s'effectuant après le décompte par un compteur d'une valeur d'attente « backoff ». Le procédé comprend :
- une étape de réception des compteurs d'attente émis successivement dans le canal de signalisation par les différentes stations concernant leurs différents flux,
- une étape de comparaison des compteurs d'attente entre eux pour détecter des valeurs identiques,
- dans le cas de valeurs identiques entre plusieurs stations, une étape de détermination d'au moins une nouvelle valeur de compteur d'attente différente de toutes les autres.

L'émission par une station de sa ou de ses backoff s'effectue dans la bande de signalisation suite au tirage/attribution d'une nouvelle valeur de backhoff à un de ses flux. Un procédé selon l'invention diminue voire supprime les risques de collision lors de l'accès à un canal partagé entre stations en éliminant toutes valeurs identiques à toutes les autres valeurs de compteurs d'attente entre ces stations. L'identité peut se comprendre comme une quasi identité, avec une différence de +1/ - 1 pour prendre en compte des décalages possibles des horloges des différentes stations.

Les équipements WiFi mettant en oeuvre un procédé selon l'invention sont multi bandes, avec une des bandes plus particulièrement utilisée pour la signalisation et une autre des bandes plus particulièrement utilisée pour la transmission des données. La bande pour la signalisation est typiquement choisie de manière avantageuse avec une couverture radio plus importante et une moindre consommation que la bande pour la transmission de données, les échanges précédents selon le procédé intervenant dans la bande de signalisation. La bande pour la transmission de données est choisie de manière avantageuse avec un débit plus important que la bande pour la signalisation.

Selon un mode de réalisation de l'invention, une des stations est un point d'accès dans lequel se déroulent les étapes de réception, de comparaison et de détermination. Selon ce mode le procédé comprend en outre :
- une étape de diffusion par le point d'accès de demande de retour de compteur d'attente « backoff request »,
- une étape d'envoi par le point d'accès d'au moins la nouvelle valeur de compteur d'attente à destination de la station associée au compteur.

Selon ce mode de mise en oeuvre une des stations qui partage le même canal est un point d'accès à un réseau de télécommunication. Selon une première réalisation, le point d'accès diffuse dans la bande de signalisation une requête, destinée aux stations qui partagent le canal, de demande de retour des valeurs de compteur d'attente. Ce mode est avantageux en ce que le point d'accès déclenche les remontées de valeurs de compteur et peut par conséquent déterminer ce déclenchement de manière opportune par rapport à l'utilisation du canal. Le point d'accès évalue la possibilité de collision en comparant entre elles les valeurs de backoff reçues et, en cas d'identité ou de presque identité entre plusieurs valeurs, il modifie ces valeurs de façon à ce qu'il n'y ait plus de valeurs identiques. Le point d'accès émet ensuite les valeurs modifiées à destination des stations correspondantes ; le point d'accès force ainsi une modification des backoff afin d'éviter les collisions.

Selon un mode de réalisation de l'invention, le procédé est tel que tout compteur d'attente associé à une file d'attente d'une station et dont les données qui y étaient préalablement stockées ont été émises dans le canal de transmission par la station, n'est plus pris en compte pour la comparaison par le point d'accès.

Selon cette réalisation, le point d'accès optimise l'encombrement mémoire nécessaire au suivi des compteurs d'attente en écartant de la comparaison tout compteur d'attente pour lequel les données, en attente lors de l'attribution de sa valeur d'attente, ont été émises.

Selon un mode de réalisation de l'invention, les étapes de diffusion de demande de retour de compteur d'attente, de réception, de comparaison, de détermination et d'envoi d'une nouvelle valeur de compteur par le point d'accès se déroulent pendant une période d'occupation du canal de transmission par une même station.

Selon une mise en oeuvre particulière, la remontée des backoff et le traitement par le point d'accès se déroulent pendant une occupation du canal de transmission. C'est-à-dire durant une période TxOP (abréviation des termes anglo saxons « Transmit OPportunity ») pendant laquelle une station occupe la bande de transmission de données. Selon ce mode de mise en oeuvre, le point d'accès récupère la valeur du champ TxOP dans les trames de données émises, champ qui donne la période d'occupation du canal de transmission des données en cours de transmission. Ce mode est particulièrement avantageux en ce que les valeurs de backoff reçues par le point d'accès correspondent aux valeurs des compteurs des stations tout le temps d'occupation du canal de transmission. Aucune modification ne doit être apportée aux backoff reçus par le point d'accès avant l'étape de comparaison entre les backoff car l'occupation du canal de transmission interdit toute période de contention et suspend donc tout décompte des compteurs d'attente par les stations.

Il est donc préférable que la durée du TxOP soit supérieure à la durée des échanges à venir dans la bande de signalisation pour qu'une autre phase de contention n'ait pas lieu avant le retour de nouveaux backoff. Dans le cas contraire, le point d'accès AP doit tenir compte des phases de contention pour mettre à jour les retours qui sont intervenus. Dans ce cas, il faut rajouter dans le « backoff response » un champ indiquant si le backoff transmis est celui avant la dernière période de contention ou après (en prenant en compte le début de la transmission du feedback response.

Selon un mode de réalisation de l'invention, le point d'accès décrémente les valeurs de backoff à chaque phase de contention et suspend cette décrémentation dès le commencement d'une transmission dans le canal de transmission.

Selon ce mode, le point d'accès compare les différentes valeurs de backoff en tenant compte du décompte effectué dans la bande de transmission de données depuis la remontée des valeurs de backoff. Les valeurs de backoff détenues par le point d'accès sont par conséquent à tout moment identiques aux valeurs des compteurs d'attente des stations. Quand une valeur de backoff devient nulle, les données de la file d'attente correspondante étant sur le point d'être transmises, le point d'accès peut avantageusement ne plus la prendre en compte optimisant ainsi son suivi des backoff.

Selon un mode de réalisation de l'invention, une des stations est un point d'accès dans lequel se déroulent les étapes de réception, de comparaison et de détermination. Selon ce mode, le procédé comprend en outre :
- une étape d'émission de compteur d'attente par les différentes stations dans la bande de signalisation,
- une étape d'envoi par le point d'accès de la nouvelle valeur de compteur d'attente.

Selon ce mode de mise en oeuvre, une des stations qui partage le même canal est un point d'accès à un réseau de télécommunication. Les stations, autre que le point d'accès, qui partagent le canal émettent successivement leurs valeurs de compteur d'attente. Ce mode est avantageux d'une part en ce que l'occupation du canal de signalisation par des signaux émis par le point d'accès est limitée et d'autre part en ce que les remontées de valeurs de compteur peuvent intervenir très rapidement après l'attribution d'une nouvelle valeur à un compteur d'une station. Ainsi, la comparaison des valeurs de backoff de manière centralisée par le point d'accès peut être effectuée immédiatement à la réception d'une valeur de compteur d'attente et généralement sans correction préalable ; le délai très court entre l'attribution d'une nouvelle valeur de backoff à un compteur d'attente d'une station et la réception de ce backoff par le point d'accès diminue fortement la probabilité que le décompte de ce compteur est déjà débuté au niveau de la station.

Il est proposé que le procédé comprend en outre :
- une étape de diffusion de compteur d'attente « backoff request » par les stations dans la bande de signalisation,
- une étape de réception par les stations des compteurs d'attente « backoff » diffusés,
- une étape d'évaluation de la probabilité des collisions par les stations,
- en fonction de la probabilité des collisions, une étape de modification des compteurs d'attente identiques.

Selon ce mode de mise en oeuvre les différentes stations diffusent spontanément en mode diffusion « broadcast » à l'ensemble de la cellule (AP, STA), dans le canal de signalisation leurs valeurs respectives de(s) compteur(s) d'attente associé(s) à une(des) file(s) d'attente. Cette diffusion intervient typiquement dès qu'une nouvelle valeur est attribuée à un des flux d'une station, typiquement à chaque tirage d'une nouvelle valeur de compteur, tirage effectué généralement de manière aléatoire. Si une station a plusieurs files d'attente, elle diffuse un backoff par file d'attente non vide. Chaque station peut recevoir les différents backoff des stations qui partagent le même canal, sous réserve que les stations émettrices et réceptrices ne sont pas des stations cachées l'une par rapport à l'autre. Chaque station compare les valeurs des backoff reçues avec les valeurs de ses propres compteurs. En cas de valeurs identiques entre un de ses compteurs et une valeur de backoff reçue, la station modifie la valeur de son compteur pour que toutes les valeurs soient différentes. Ainsi, le procédé permet de diminuer la probabilité des collisions par modification par la station de son compteur (backoff) si celui-ci est égal à un compteur (backoff) diffusé par une autre station. Ce mode peut être mis en oeuvre aussi bien dans un réseau avec infrastructure que dans un réseau ad hoc.

En tenant compte du décompte intervenu dans la bande de transmission de données depuis la remontée des valeurs de backoff des autres stations, une station peut déterminer les backoff qui génèreront une collision lors d'un prochain tirage de backoff correspondant à l'arrivée dans une des ses files d'attente d'un nouveau paquet. Si le backoff tiré conduit très probablement à une collision, la station peut lancer un autre tirage ou elle peut effectuer un ajustement de ce backoff en l'incrémentant ou le décrémentant. Selon une réalisation particulière, seule l'incrémentation est autorisée.

Il est proposé en outre une station pour transmettre des paquets de données. La station est plus particulièrement destinée à un réseau d'accès avec partage d'un canal multi bandes entre différentes stations, une première bande étant dite de transmission, une deuxième bande étant dite de signalisation. L'accès au canal par une station pour transmettre des données d'un flux s'effectuant après le décompte par un compteur d'une valeur d'attente dite backoff.

Une telle station comprend :
- des moyens d'émission/réception pour transmettre et recevoir des paquets de données via le canal de transmission multi bandes,
- un moyen pour mémoriser des compteurs d'attente, émis successivement par les différentes stations se partageant le canal multi bandes, concernant leurs différents flux,
- un moyen de comparaison des compteurs d'attente pour détecter des valeurs identiques entre un compteur de la station et un compteur d'une autre station,
- dans le cas de valeurs identiques, un moyen pour déterminer au moins une nouvelle valeur du compteur d'attente de la station différente de toutes les autres valeurs.

Pour exemple, le réseau d'accès est un réseau WiFi avec une bande de transmission qui correspond à une bande de 5GHz en référence à un réseau conforme au standard IEEE802.11n et avec une bande de signalisation qui correspond à une bande 868-868,6MHz en référence à un réseau conforme au standard IEEE802.11ah. Le réseau WiFi comprend un point d'accès AP et au moins deux stations. Le standard IEEE802.11ad défini un mode multi-bande qui est applicable à tous les systèmes WIFI (11a,b,g,n,ac,ad,af,ah, ...) même si sa définition n'intervient que dans ce standard avec des bandes spécifiques.

Une station WiFi reçoit les différents backoff émis par les autres stations faisant partie de la même cellule (même BSS), voire de stations appartenant à un autre BSS dit OBSS. La station compare ces valeurs de backoff reçues avec les valeurs de ses propres compteurs. Dans le cas où un de ses compteurs est identique à un backoff reçu, la station détermine une nouvelle valeur pour son compteur différente de toutes les valeurs reçues de backoff. Ainsi, le risque que la station entre en collision avec une autre station lors de l'accès au canal multi bandes partagé est très fortement diminué, voire voisin de zéro.

Une telle station est notamment adaptée à mettre en oeuvre le procédé de transmission décrit précédemment. Il s'agit par exemple d'un point d'accès ou d'une station Wifi.

Selon un mode de réalisation de l'invention, la station comprend en outre :
- un moyen pour diffuser dans le canal de signalisation une demande de retour de compteur d'attente,
- un moyen pour émettre dans le canal de signalisation la au moins une nouvelle valeur de compteur d'attente.

La station selon ce mode est typiquement un point d'accès adapté pour limiter, voire éviter des collisions entre stations lors de l'accès au canal multi bandes partagé en supprimant les valeurs de backoff identiques entre files d'attente des stations

Selon l'invention, la diffusion ou l'échange d'informations dans la bande de signalisation peut se faire par de nouveaux champs créés au niveau de la couche MAC puis mis en trame : une trame de requête de backoff « backoff request », une trame de retour de backoff « backoff response », une trame de backoff modifié « backoff modif ».

La trame « backoff request » comprend typiquement :
- l'identifiant de la bande de transmission de données concernée par les compteurs
   d'attente backoff,
- éventuellement, l'identifiant de l'ensemble des stations qui doivent effectuer un retour et l'ordre de leur retour, ou l'identifiant d'un groupe constitué de ces stations (dans ce cas l'ordre de retour fait partie d'un paramétrage initial du système WiFi) ou une indication d'un retour en mode diffusion « broadcast ».

La trame « backoff response » comprend typiquement :
- l'identifiant de la bande de transmission de données concernée,
- l'identifiant du flux concerné par le backoff (ou s'il y a plusieurs flux leurs identifiants de manière concaténée),
- le(s) backoff et la classe de service utilisée par le flux associé ou la somme du backoff et de l'AIFS (Arbitrary Inter Frame Space) de la classe de service utilisée par le flux (AIFSN + Backoff).

La trame « backoff modif » comprend typiquement :
- l'identifiant de la bande de transmission de données concernée,
- l'identifiant du flux concerné par la modification de backoff (ou s'il y a plusieurs flux leurs identifiants de manière concaténée),
- le nouveau backoff ou la modification imposée au backoff (+1, -1, ...) ou la nouvelle somme backoff+AIFS de la classe de service utilisée par le flux.

Pour chacun des modes de réalisation de l'invention, la transmission des informations dans la bande de signalisation peut, de manière alternative, se faire en utilisant des champs des entêtes PLCP (déterminée au niveau de la couche physique, dite PHY), afin de réduire la taille et l'occupation du canal pour ces transmissions. Par exemple, le champ VHT-SIG en référence au standard IEEE 802.11ac (et de manière similaire pour un autre standard comme le IEEE 802.11 ah) comprend des champs groupID et NSTS qui peuvent être utilisés pour la signalisation et la transmission des trames « backoff request », « «backoff response » et « backoff modifiée ». Selon cette alternative, les champs de la couche PHY permettent de récupérer les informations à transmettre à la couche MAC pour un traitement selon l'invention.

Selon une implémentation préférée, les étapes du procédé de transmission de paquets de données destiné à un réseau d'accès avec partage d'un canal multi bandes entre stations selon l'invention sont déterminées par les instructions d'un programme sous forme d'un ou plusieurs modules incorporés respectivement dans des circuits électroniques telles des puces elles-mêmes pouvant être disposées dans un dispositif électronique tel une station. Le procédé de transmission de paquets de données, selon l'invention peut tout aussi bien être mis en oeuvre lorsque ce programme (ou ses modules) est chargé dans un organe de calcul tel un processeur ou équivalent dont le fonctionnement est alors commandé par l'exécution du programme.

En conséquence, l'invention s'applique également à un programme d'ordinateur (ou ses différents modules), notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

Alternativement, le support d'informations peut être un circuit intégré dans lequel le programme est incorporé, le circuit étant adapté pour exécuter ou pour être utilisé dans l'exécution du procédé en question.

D'autre part, le programme peut être traduit en une forme transmissible telle qu'un signal électrique ou optique, qui peut être acheminé via un câble électrique ou optique, par radio ou par d'autres moyens. Le programme selon l'invention peut être en particulier téléchargé sur un réseau de type Internet.

Donc, l'invention a en outre pour objet un programme d'ordinateur sur un support d'informations. Le programme comporte des instructions de programme adaptées à la mise en oeuvre d'un procédé de transmission de paquets de données mis en oeuvre par une station destinée à un réseau d'accès avec partage d'un canal multi bandes entre stations, selon l'un des objets de l'invention, lorsque ledit programme est chargé et exécuté dans une station destinée à mettre en oeuvre le procédé de transmission.

Et l'invention a en outre pour objet un support d'informations comportant des instructions de programme adaptées à la mise en oeuvre d'un procédé de transmission de paquets de données mis en oeuvre par une station destinée à un réseau d'accès avec partage d'un canal multi bandes entre stations, selon l'un des objets de l'invention, lorsque ledit programme est chargé et exécuté dans une station destinée à mettre en oeuvre le procédé de transmission.

### Liste des figures

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
- la figure 1, citée en relation avec l'art antérieur, illustre le mécanisme d'accès CSMA-CA au canal partagé ;
- la figure 2 illustre quatre files d'attente d'une même station associée respectivement à quatre flux de données ;
- la figure 3 est un organigramme des principales étapes du procédé de transmission selon l'invention ;
- la figure 4 est une illustration d'un premier mode de réalisation d'un procédé de transmission selon l'invention selon lequel la comparaison des valeurs de backoff entre elles est effectuée par le point d'accès AP, dans une mise en oeuvre particulière selon laquelle la remontée des backoff et le traitement par le point d'accès AP se déroulent pendant une occupation du canal de transmission ;
- la figure 5 est une illustration d'un premier mode de réalisation d'un procédé de transmission selon l'invention selon lequel la comparaison des valeurs de backoff entre elles est effectuée par le point d'accès AP, dans une mise en oeuvre particulière selon laquelle l'émission par une station d'un backoff s'effectue dans la bande de signalisation suite au tirage/attribution d'une nouvelle valeur de backoff à l'un de ses flux ;
- la figure 6 est une illustration d'un deuxième mode de réalisation d'un procédé de transmission selon l'invention selon lequel la comparaison des valeurs de backoff entre elles est effectuée par les stations ;
- la figure 7 est un schéma d'un exemple de structure simplifiée d'une station apte à transmettre des paquets de données, selon un objet de l'invention ;
- la figure 8 est un schéma d'un exemple de structure simplifiée d'une station ayant une fonction de point d'accès selon un objet de l'invention.

### Description de modes de réalisation de l'invention

L'invention est décrite dans le contexte d'un réseau de communication WiFi avec une bande de transmission qui correspond à une bande de 5GHz en référence à un réseau conforme au standard IEEE802.11n et avec une bande de signalisation qui correspond à une bande 868-868,6MHz en référence à un réseau conforme au standard IEEE802.11ah. Le réseau WiFi considéré comprend quatre stations dont une assure en particulier une fonctionnalité de point d'accès. Cette station est désignée ultérieurement par les termes «point d'accès », AP, elle peut correspondre à une passerelle ou à un relais.

L'accès au canal de transmission partagé du réseau Wi-Fi est classiquement de type CSMA-CA, c'est-à-dire avec une écoute pendant un certain temps comprenant la durée, dite backoff, d'un compteur dont la valeur d'initialisation est tirée de manière aléatoire.

L'invention entreprend d'éliminer les valeurs identiques de backoff entre stations (AP et STAi) partageant le même canal WiFi pour éliminer les risques de collision sur la bande de transmission.

Toute station comprend au moins une file d'attente dans laquelle elle range les paquets qu'elle doit transmettre à une entité distante. La description se place dans un contexte à infrastructure selon lequel la transmission à destination de l'entité distante intervient via le point d'accès AP et le canal partagé.

Ces paquets sont générés par une application telle que, par exemple, une communication vocale. La station peut avoir plusieurs files d'attente dans lesquelles elles rangent des paquets générés par des applications qui se déroulent simultanément sur la station, par exemple une consultation Internet et une communication vocale ; une station comprend typiquement une file d'attente par flux. La figure 2 illustre l'exemple de quatre files d'attente.

Dès qu'un paquet est mis dans une file d'attente qui était vide, il y a tirage d'une valeur initiale de backoff associée à la file d'attente du fait du mécanisme d'accès au canal. Pour accéder au canal en vue de transmettre les paquets en attente, la station diffère la tentative d'accès en lançant le décompte de son compteur backoff dès le début de la fenêtre de contention CW. En cours de décompte du backoff, le décompte est suspendu à chaque nouvelle occupation du canal par une autre station et pendant la durée de cette occupation. En fin d'une occupation, le décompte est repris. En fin de décompte du backoff, il y a transmission dès que le canal est libre. Une fenêtre de contention CW commence après toute fin d'occupation du canal de transmission. Sa durée est généralement paramétrable en fonction des caractéristiques de la couche physique utilisée par le système d'accès et peut changer en fonction du type de flux et du succès ou échec lors de la dernière tentative d'accès au canal par la station. Le tirage des valeurs initiales de backoff est fait dans la fenêtre [0, CW].

Quand la file d'attente se remplit de nouveau, il y a tirage d'une nouvelle valeur de backoff. La station émet chaque nouvelle valeur de backoff dans la bande de signalisation.

La figure 3 est un organigramme des principales étapes du procédé de transmission selon l'invention.

Le procédé 1 comprend une étape de réception REC des compteurs d'attente émis successivement dans le canal de signalisation par les différentes stations concernant leurs différents flux.

Le procédé 1 comprend une étape de comparaison COMP des compteurs d'attente entre eux pour détecter des valeurs identiques.

Le procédé 1 comprend une étape de détermination BACK d'au moins une nouvelle valeur de compteur d'attente différente de toutes les autres, dans le cas de valeurs de compteur backoff identiques entre plusieurs stations.

Selon un premier mode de réalisation, la comparaison des valeurs de backoff entre elles est effectuée par le point d'accès AP.

Le point d'accès AP et les stations échangent des trames de contrôle pour que le point d'accès AP et les stations STAi, i=1,2,etc sélectionnent le mode d'amélioration de la QoS, parmi les différents modes possibles, en relation avec la bande de transmission de données.

Selon une première réalisation, le point d'accès AP diffuse dans la bande de signalisation une requête de demande de retour de valeurs de backoff , « backoff request ». Par exemple, les stations destinataires sont au nombre de trois STAi, i=1-3. Elles reçoivent cette demande de retour. De manière particulière, la requête peut indiquer un ordre de réponse des stations ce qui a pour avantage d'assurer une utilisation efficace de la bande de transmission et de supprimer tout risque de collision entre les stations pour l'accès au canal de signalisation. Ce mécanisme peut s'apparenter au mécanisme de scheduling coordonné par le point d'accès appelé HCCA («hybrid coordination function controlled channel access » selon la terminologie anglo saxonne) introduit dans la norme 802.11 qui permet de distribuer l'accès au canal mais sans les contraintes de remontée de besoins, ou au mécanisme de récupération des feedback des canaux des utilisateurs dans un contexte multi-user MIMO comme défini dans le standard IEEE 802.11ac.

Les différentes stations STAi, i=1-3, émettent en retour leurs compteurs d'attente backoff associés respectivement à leurs files d'attente. Une station peut avoir plusieurs files d'attente, typiquement une par classe de service. Ces classes de service sont par exemple signalées dans le Champ « Qos control / TID » de l'entête MAC défini au §7.1.3.5 de la norme 802.11e. Les paquets sont étiquetés en relation avec la classe de service à laquelle ils se rapportent sachant que quatre types de classes sont classiquement distingués : type « Best Effort » (sans priorité particulière), type « Background » (à traiter en dernier), type « Voix » (nécessitant une transmission en temps réel), type « Vidéo » (nécessitant une transmission de haute qualité).

En outre, un point d'accès pouvant être sollicité par une pluralité de stations associées, il peut avoir une pluralité de paquets à transmettre vers plusieurs équipements destinataires, ces paquets étant stockés dans une ou plusieurs files d'attente avant leur traitement par le point d'accès.

Les stations émettent successivement leurs valeurs de backoff en utilisant la bande de signalisation. En cas de valeurs identiques, le point d'accès détermine une nouvelle valeur de backoff. Selon ce mode, le procédé comprend en outre une étape d'envoi par le point d'accès AP de la nouvelle valeur de compteur d'attente, via le canal de signalisation.

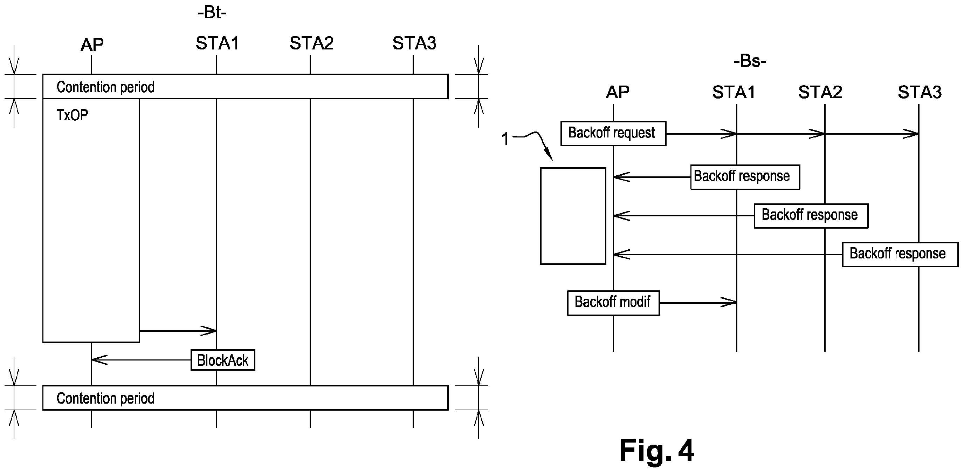

Selon une mise en oeuvre particulière illustrée par la figure 4, la remontée des backoff et le traitement par le point d'accès AP se déroulent pendant une occupation de la bande de transmission Bt. C'est-à-dire, durant une période TxOP (abréviation des termes anglo saxons « transmit opportunity ») pendant laquelle une station occupe la bande de transmission de données. Cette période TxOP est signalée avec tout paquet transmis dans la bande de transmission. Le point d'accès peut donc connaitre la période TxOP et déterminer si sa durée est suffisante pour couvrir la remontée des différents backoff. Si la durée est suffisante, c'est-à-dire que la durée du TxOP est supérieure à la durée des échanges à venir dans la bande de signalisation Bs pour la remontée des backoff, alors le point d'accès a connaissance des différents backoff avant toute nouvelle phase de contention. Dans le cas contraire, le point d'accès AP doit tenir compte des phases de contention intervenues pendant la remontée pour mettre à jour les valeurs de backoff remontées et associées aux stations impliquées dans ces phases de contention. Dans ce cas, le « backoff response » de chaque station comprend un champ indiquant si le backoff transmis est celui après une période de contention et un champ identifiant cette période éventuelle (en prenant en compte le début de la transmission du backoff response). Si une collision est détectée lors du déroulement du procédé 1, entre les stations STA1 et STA2 selon l'illustration, l'AP détermine une nouvelle valeur pour la station STA1 qui est émise dans une trame Backoff modif à destination de la station STA1.

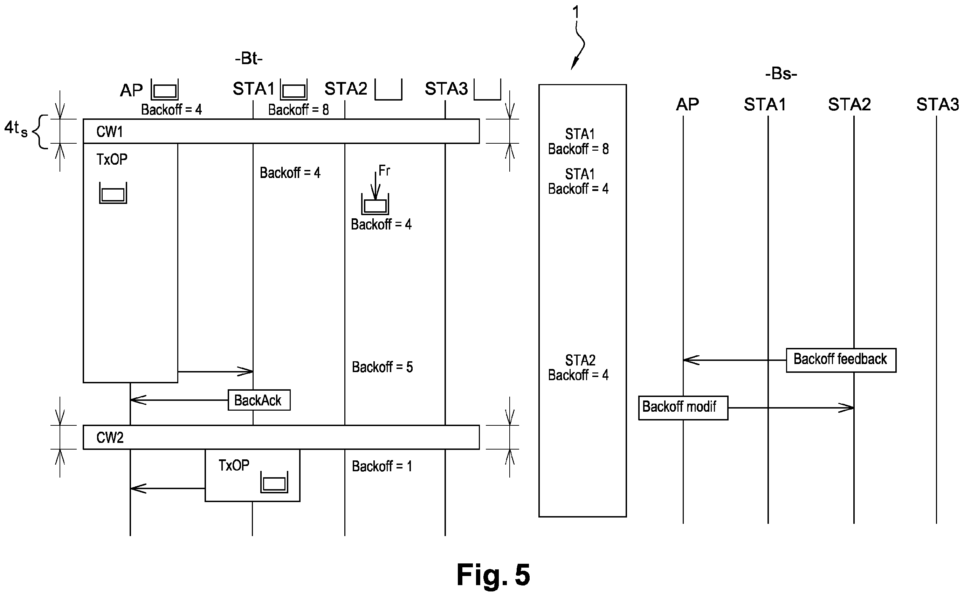

Selon une deuxième réalisation illustrée par la figure 5, l'émission par une station d'un backoff s'effectue dans la bande de signalisation suite au tirage/attribution d'une nouvelle valeur de backoff à l'un de ses flux. Selon ce mode, le point d'accès AP compare les différentes valeurs de backoff en tenant compte du décompte effectué par les compteurs de chaque station, en relation avec l'occupation de la bande de transmission Bt de données, depuis la remontée des valeurs de backoff.

Selon l'illustration, le point d'accès AP a reçu le backoff=8 de la station STA1 avant la fenêtre de contention CW1. Le point d'accès AP reçoit le backoff=4 de la station STA2 suite à l'arrivée de paquets à transmettre par la station STA2, après la fenêtre de contention CW1.

Le point d'accès AP évalue la possibilité de collision en comparant les valeurs de backoff entre elles. Si des valeurs sont identiques, le point d'accès détermine une nouvelle valeur de backoff et envoie cette nouvelle valeur de compteur d'attente, via le canal de signalisation Bs : le point d'accès AP force une modification des backoff pour éviter les collisions.

Selon l'illustration, les valeurs de backoff des stations STA2 et STA1 sont identiques après mise à jour de la valeur de backoff de STA1 reçue par l'AP avant la fenêtre de contention CW1. Cette mise à jour consiste à modifier la valeur reçue du décompte effectué par STA1 depuis l'émission de son backoff, ce décompte est évalué à la durée de la fenêtre de contention de quatre périodes ts « timeslots » selon l'exemple, ce qui conduit à une valeur de backoff mis à jour de quatre pour la station STA1. Il y a donc une collision prévisible entre les stations STA1 et STA2 puisque leurs backoff sont identiques. La nouvelle valeur de cinq déterminée par l'AP est émise à destination de la station STA2 dans une trame backoff modif.

Selon un deuxième mode de réalisation, la comparaison des valeurs de backoff entre elles est effectuée par les stations.

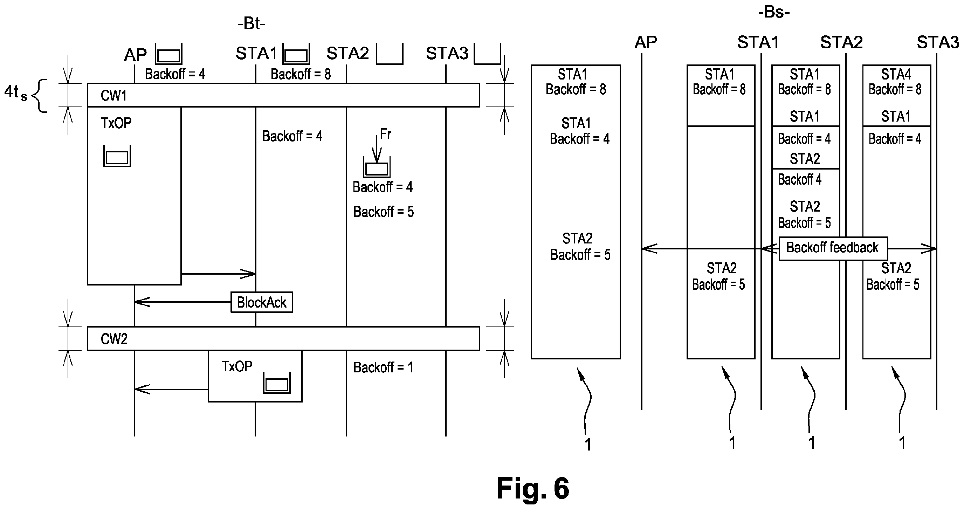

Selon ce mode illustré par la figure 6, chaque station diffuse, i.e. en mode broadcast, à l'ensemble de la cellule, AP et STAi, i=1-3, dans la bande de signalisation Bs, l'information du backoff associé à la bande Bt de transmission de données dès l'attribution d'une valeur initiale à un compteur d'attente associé à un de ses flux.

Chaque station, AP et STAi, i=1-3, qui partage le même canal reçoit les valeurs diffusées par les autres stations. Selon l'illustration, avant la fenêtre de contention CW1, seule la station STA1 diffuse un backoff, ce backoff a pour valeur huit. Depuis l'émission de son backoff, le décompte du compteur de STA1 est évalué à la durée de la fenêtre de contention de quatre périodes ts « timeslots » selon l'exemple, ce qui conduit à une valeur de backoff mis à jour de quatre pour la station STA1 après la fenêtre de contention CW1. Après cette fenêtre de contention CW1, la file d'attente de la station STA2 reçoit des paquets à émettre. Dès que sa file d'attente se remplit, la station STA2 tire une nouvelle valeur de backoff, égale à quatre, et la diffuse.

Une station réceptrice peut corriger les valeurs de backoff reçues, du décompte opéré par le compteur après la diffusion de sa valeur initiale de backoff, en exploitant l'information sur l'occupation du canal de transmission : début/fin de transmission et fenêtre(s) de contention. Selon l'illustration, la station STA2 avait reçu le backoff de huit de la station STA1 avant la fenêtre de contention CW1. Compte tenu du décompte intervenu depuis la diffusion de cette valeur, la station STA2 corrige cette valeur et le backoff corrigée de la station STA1 a pour valeur quatre lors du remplissage de la file d'attente de la station STA2.

Ainsi, une station peut comparer ses valeurs de backoff avec celles reçues et corrigées pour déterminer s'il y a des valeurs identiques. Selon l'illustration, la station STA2 détecte donc un risque de collision avec la station STA1 car la valeur de backoff corrigée de STA1 et la valeur de backoff de STA2 sont identiques.

En cas d'identité, la station détermine une nouvelle valeur initiale de backoff pour son compteur qui est différente de toutes les autres valeurs. En outre, dans le cas d'un nouveau tirage de backoff déclenché par l'arrivée dans une file d'attente d'un nouveau paquet, la station peut rapidement déterminer si une collision risque d'intervenir en comparant cette nouvelle valeur avec les backoffs reçus et corrigés. Si la valeur tirée conduit à une collision, un autre tirage peut être lancé ou un ajustement de ce backoff peut-être effectué (en ajoutant +1 ou -1 à la valeur tirée par la station (selon une réalisation particulière, seuls les incréments (+x) peuvent être autorisés)). Selon l'illustration, la station STA2 modifie par conséquent sa valeur de backoff, par exemple par incrémentation de un, la valeur devient cinq, et vérifie que cette valeur est différente des autres valeurs de backoff dont elle a la connaissance. Après détermination de cette nouvelle valeur, la station STA2 diffuse cette valeur modifiée de cinq à l'ensemble de la cellule, AP, STA1, STA3.

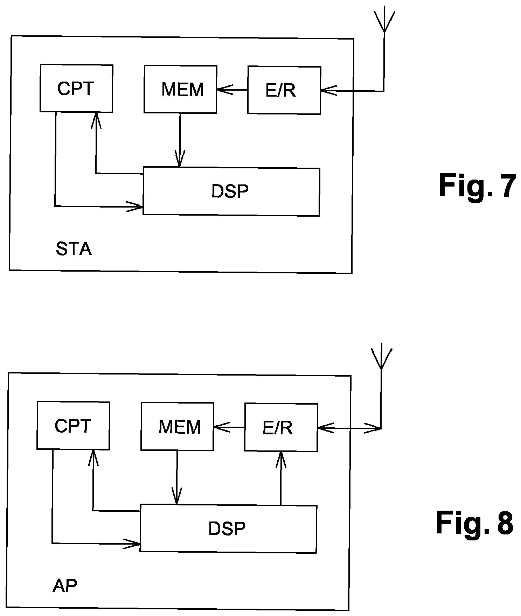

La figure 7 est un schéma d'un exemple de structure simplifiée d'une station apte à transmettre des paquets de données, selon un objet de l'invention.

La station STA est en particulier destinée à un réseau d'accès avec partage d'un canal multi bandes entre différentes stations, une première bande étant dite de transmission, une deuxième bande étant dite de signalisation, l'accès au canal par une station pour transmettre des données d'un flux s'effectuant après le décompte par un compteur d'une valeur d'attente, Backoff.

La station STA comprend :
- des moyens E/R d'émission/réception pour transmettre et recevoir des paquets de données via le canal de transmission multi bandes. Ces moyens sont deux chaînes d'émission/réception classiques dont les caractéristiques fréquentielles sont adaptées respectivement pour la bande de transmission et la bande de signalisation.
- un moyen pour mémoriser des compteurs d'attente, émis successivement par les différentes stations se partageant le canal multi bandes, concernant leurs différents flux. Ce moyen est typiquement un moyen de mémorisation MEM, par exemple un registre ou une mémoire qui est connecté à la chaîne d'émission/réception adaptée à la bande de transmission.
- un moyen de comparaison des compteurs d'attente pour détecter des valeurs identiques entre un compteur de la station et un compteur d'une autre station. Ce moyen est typiquement un moyen de calcul DSP, par exemple un microprocesseur ou un DSP (Digital Signal Processeur), micro programmé pour effectuer la comparaison entre les valeurs de backoff mémorisées et les valeurs de backoff des compteurs CPT de la station. Ce DSP est connecté aux compteurs d'attente CPT de la station et au moyen de mémorisation MEM.
- un moyen pour déterminer, dans le cas de valeurs identiques, au moins une nouvelle valeur d'au moins un des compteurs d'attente pour lesquels existe un risque de collision, différente de toutes les autres valeurs. Ce compteur d'attente peut être un compteur de la station. Ce moyen est typiquement un moyen de calcul, par exemple un microprocesseur, un processeur de signal, micro programmé pour déterminer au moins une nouvelle valeur de backoff. Ce moyen est connecté aux compteurs d'attente de la station. Selon le mode de réalisation illustré, ce moyen se confond avec le moyen de comparaison, par contre la micro programmation du processeur de signal DSP comprend des modules adaptés pour effectuer respectivement la comparaison et la détermination. Selon une variante de réalisation le moyen peut être réparti entre le moyen de calcul DSP et le compteur CPT : le moyen de calcul DSP commande au compteur CPT de tirer une nouvelle valeur et le moyen de calcul DSP réitère sa commande tant que la valeur de backoff tirée ne se distingue pas des valeurs de backoff des autres compteurs.
La figure 8 est un exemple de structure simplifiée d'une station ayant une fonction de point d'accès selon un objet de l'invention. La station AP comprend, outre les moyens illustrés en regard de la figure précédente :
- un moyen pour diffuser une demande de retour de compteur d'attente dans le canal de signalisation. Ce moyen est typiquement un moyen de calcul, par exemple un microprocesseur ou un DSP (Digital Signal Processeur), micro programmé pour générer une trame de demande de retour selon un format, déterminé typiquement par la couche MAC utilisée par la station, qui coopère avec la chaîne d'émission/réception adaptée à la bande de signalisation. Par rapport à la figure, le même DSP peut être utilisé, la différence vient d'une micro programmation spécifique pour que le DSP puisse générer la demande de retour.
- un moyen pour émettre dans le canal de signalisation la nouvelle valeur de compteur d'attente destinée à la station comprenant ce compteur. Ce moyen est typiquement un moyen de calcul, par exemple un microprocesseur ou un DSP (Digital Signal Processeur), micro programmé pour récupérer la nouvelle valeur de backoff, et qui coopère avec la chaîne d'émission/réception adaptée à la bande de signalisation.

L'objet de l'invention est défini par les revendications indépendantes.

## Revendications

1. Procédé (1) de transmission de paquets de données destiné à un réseau d'accès avec partage d'un canal multi bandes entre stations, une des stations étant un point d'accès, une première bande étant dite de transmission, une deuxième bande étant dite de signalisation, l'accès au canal par une station pour transmettre des données d'un flux s'effectuant après le décompte par un compteur d'une valeur d'attente (backoff), le procédé comprenant :
- une étape (REC) de réception par le point d'accès des valeurs des compteurs d'attente émises successivement dans la bande de signalisation par les différentes stations concernant leurs différents flux,
- une étape (COMP) de comparaison par le point d'accès des valeurs des compteurs d'attente reçues entre elles pour détecter des valeurs identiques,
- dans le cas de valeurs identiques entre plusieurs stations, une étape (BACK) de détermination par le point d'accès d'au moins une nouvelle valeur de compteur d'attente différente de toutes les valeurs reçues,
- une étape d'envoi par le point d'accès (AP) d'au moins la nouvelle valeur de compteur d'attente à destination de la station associée à ce compteur d'attente.

2. Procédé (1) de transmission de paquets de données selon la revendication 1, comprenant en outre :
- une étape de diffusion par le point d'accès (AP) de demande de retour de valeur de compteur d'attente (backoff request).

3. Procédé (1) de transmission de paquets de données selon la revendication 1 ou 2, dans lequel toute valeur d'un compteur d'attente associé à une file d'attente d'une station et dont les données qui y étaient préalablement stockées ont été émises dans la bande de transmission par la station, n'est plus pris en compte pour la comparaison par le point d'accès.

4. Procédé (1) de transmission de paquets de données selon la revendication 2 ou 3, dans lequel les étapes de diffusion de demande de retour de valeur de compteur d'attente, de réception, de comparaison, de détermination et d'envoi d'une nouvelle valeur de compteur d'attente par le point d'accès se déroulent pendant une période d'occupation de la bande de transmission par une même station.

5. Procédé (1) de transmission de paquets de données selon la revendication 1, 2 ou 3, dans lequel le point d'accès décrémente les valeurs des compteurs d'attente à chaque phase de contention et suspend cette décrémentation dès le commencement d'une transmission dans la bande de transmission.

6. Procédé (1) de transmission de paquets de données selon la revendication 1 ou 2 **caractérisé en ce qu'**il comprend en outre :
- une étape d'émission de valeurs de compteurs d'attente par les différentes stations (SM) dans la bande de signalisation.

7. Station (STA) pour transmettre des paquets de données, destinée à un réseau d'accès avec partage d'un canal multi bandes entre différentes stations, une première bande étant dite de transmission, une deuxième bande étant dite de signalisation, l'accès au canal par une station pour transmettre des données d'un flux s'effectuant après le décompte par un compteur d'une valeur d'attente (backoff), la station comprenant :
- des moyens d'émission/réception pour transmettre et recevoir des paquets de données via le canal multi bandes,
- un moyen pour mémoriser des valeurs de compteurs d'attente, émises successivement par les différentes stations se partageant le canal multi bandes, concernant leurs différents flux,
- un moyen de comparaison des valeurs de compteurs d'attente reçues pour détecter des valeurs identiques,
- dans le cas de valeurs identiques entre plusieurs stations, un moyen pour déterminer au moins une nouvelle valeur du compteur d'attente différente de toutes les valeurs reçues,
- un moyen pour émettre dans la bande de signalisation la au moins une nouvelle valeur de compteur d'attente à destination de la station associée à ce compteur d'attente.

8. Station (AP) selon la revendication précédente telle qu'elle comprend en outre :
- un moyen pour diffuser dans la bande de signalisation une demande de retour de valeur de compteur d'attente.

9. Programme d'ordinateur adapté pour être sur un support d'informations, ledit programme comportant des instructions de programme adaptées à la mise en oeuvre d'un procédé de transmission de paquets de données mis en oeuvre par une station destinée à un réseau d'accès avec partage d'un canal multi bandes entre stations, selon l'une quelconque des revendications 1 à 6, lorsque ledit programme est chargé et exécuté dans une station destinée à mettre en oeuvre le procédé de transmission.

10. Support d'informations comportant des instructions de programme adaptées à la mise en oeuvre d'un procédé de transmission de paquets de données mis en oeuvre par une station destinée à un réseau d'accès avec partage d'un canal multi bandes entre stations, selon l'une quelconque des revendications 1 à 6, lorsque ledit programme est chargé et exécuté dans une station destinée à mettre en oeuvre le procédé de transmission.

## Patentansprüche

1. Verfahren (1) zur Übertragung von Datenpaketen, das für ein Zugangsnetz mit gemeinsamer Nutzung eines Mehrbandkanals durch Stationen bestimmt ist, wobei eine der Stationen ein Zugangspunkt ist, ein erstes Band ein sogenanntes Übertragungsband ist, ein zweites Band ein sogenanntes Signalisierungsband ist, der Zugang zu dem Kanal durch eine Station zum Übertragen der Daten eines Stroms nach Ablauf eines Zählers eines Wartewertes (Backoff) erfolgt, wobei das Verfahren umfasst:
- einen Schritt (REC) des Empfangs, durch den Zugangspunkt, der Werte der Wartezähler, die in dem Signalisierungsband nacheinander von den verschiedenen Stationen hinsichtlich ihrer verschiedenen Ströme gesendet werden,
- einen Schritt (COMP) des Vergleichs, durch den Zugangspunkt, der empfangenen Werte der Wartezähler miteinander, um identische Werte zu erkennen,
- im Falle identischer Werte für mehrere Stationen, einen Schritt (BACK) der Bestimmung, durch den Zugangspunkt, wenigstens eines neuen Wartezählerwertes, der von allen empfangenen Werten verschieden ist,
- einen Schritt des Sendens, durch den Zugangspunkt (AP), wenigstens des neuen Wartezählerwertes an die Station, die diesem Wartezähler zugeordnet ist.

2. Verfahren (1) zur Übertragung von Datenpaketen nach Anspruch 1, welches außerdem umfasst:
- einen Schritt des Rundsendens, durch den Zugangspunkt (AP), einer Anforderung zum Zurücksenden eines Wartezählerwertes (Backoff Request).

3. Verfahren (1) zur Übertragung von Datenpaketen nach Anspruch 1 oder 2, wobei jeder Wert eines Wartezählers, der einer Warteschlange einer Station zugeordnet ist und dessen Daten, die dort zuvor gespeichert waren, von der Station im Übertragungsband gesendet worden sind, für den Vergleich durch den Zugangspunkt nicht mehr berücksichtigt wird.

4. Verfahren (1) zur Übertragung von Datenpaketen nach Anspruch 2 oder 3, wobei die Schritte des Rundsendens einer Anforderung zum Zurücksenden eines Wartezählerwertes, des Empfangs, des Vergleichs, der Bestimmung und des Sendens eines neuen Wartezählerwertes durch den Zugangspunkt während eines Zeitraums der Belegung des Übertragungsbandes durch ein und dieselbe Station erfolgen.

5. Verfahren (1) zur Übertragung von Datenpaketen nach Anspruch 1, 2 oder 3, wobei der Zugangspunkt die Werte der Wartezähler in jeder Phase eines Konflikts dekrementiert und diese Dekrementierung vom Beginn einer Übertragung im Übertragungsband an unterbricht.

6. Verfahren (1) zur Übertragung von Datenpaketen nach Anspruch 1 oder 2, **dadurch gekennzeichnet, dass** es außerdem umfasst:
- einen Schritt des Sendens von Wartezählerwerten durch die verschiedenen Stationen (SM) im Signalisierungsband.

7. Station (STA) zum Übertragen von Datenpaketen, die für ein Zugangsnetz mit gemeinsamer Nutzung eines Mehrbandkanals durch verschiedene Stationen bestimmt ist, wobei ein erstes Band ein sogenanntes Übertragungsband ist, ein zweites Band ein sogenanntes Signalisierungsband ist, der Zugang zu dem Kanal durch eine Station zum Übertragen der Daten eines Stroms nach Ablauf eines Zählers eines Wartewertes (Backoff) erfolgt, wobei die Station umfasst:
- Sende-/Empfangsmittel zum Übertragen und Empfangen von Datenpaketen über den Mehrbandkanal,
- ein Mittel zum Speichern der Werte von Wartezählern, die nacheinander von den verschiedenen Stationen, die den Mehrbandkanal gemeinsam nutzen, hinsichtlich ihrer verschiedenen Ströme gesendet werden,
- ein Mittel zum Vergleich der empfangenen Werte von Wartezählern, um identische Werte zu erkennen,
- im Falle identischer Werte für mehrere Stationen, ein Mittel zum Bestimmen wenigstens eines neuen Wertes des Wartezählers, der von allen empfangenen Werten verschieden ist,
- ein Mittel zum Senden, im Signalisierungsband, des wenigstens einen neuen Wartezählerwertes an die Station, die diesem Wartezähler zugeordnet ist.

8. Station (AP) nach dem vorhergehenden Anspruch, welche außerdem umfasst:
- ein Mittel zum Rundsenden, im Signalisierungsband, einer Anforderung zum Zurücksenden eines Wartezählerwertes.

9. Computerprogramm, das dafür ausgelegt ist, sich auf einem Speichermedium zu befinden, wobei das Programm Programmanweisungen umfasst, die ausgelegt sind für die Durchführung eines Verfahrens zur Übertragung von Datenpaketen, das von einer Station durchgeführt wird, die für ein Zugangsnetz mit gemeinsamer Nutzung eines Mehrbandkanals durch Stationen bestimmt ist, nach einem der Ansprüche 1 bis 6, wenn das Programm in eine Station geladen und in dieser ausgeführt wird, die dazu bestimmt ist, das Übertragungsverfahren durchzuführen.

10. Speichermedium, welches Programmanweisungen umfasst, die ausgelegt sind für die Durchführung eines Verfahrens zur Übertragung von Datenpaketen, das von einer Station durchgeführt wird, die für ein Zugangsnetz mit gemeinsamer Nutzung eines Mehrbandkanals durch Stationen bestimmt ist, nach einem der Ansprüche 1 bis 6, wenn das Programm in eine Station geladen und in dieser ausgeführt wird, die dazu bestimmt ist, das Übertragungsverfahren durchzuführen.

## Claims

1. Method (1) for transmitting data packets intended for an access network with sharing of a multi-band channel between stations, one of the stations being an access point, a first band being called transmission band, a second band being called signalling band, the access to the channel by a station to transmit data of a stream being performed after the counting by a counter of a backoff value (backoff), the method comprising:
- a step (REC) of reception by the access point of the backoff counter values transmitted in succession in the signalling band by the different stations concerning their different streams,
- a step (COMP) of comparison by the access point of the backoff counter values received with one another to detect identical values,
- in the case of identical values between several stations, a step (BACK) of determination by the access point of at least one new backoff counter value different from all the values received,
- a step of sending by the access point (AP) of at least the new backoff counter value to the station associated with this backoff counter.

2. Method (1) for transmitting data packets according to Claim 1, further comprising:
- a step of broadcasting by the access point (AP) of a request for return of a backoff counter value (backoff request).

3. Method (1) for transmitting data packets according to Claim 1 or 2, wherein any value of a backoff counter associated with a queue of a station and of which the data which were previously stored therein have been transmitted in the transmission band by the station is no longer taken into account for the comparison by the access point.

4. Method (1) for transmitting data packets according to Claim 2 or 3, wherein the steps of broadcasting of the request for return of a backoff counter value, of reception, of comparison, of determination and of sending of a new backoff counter value by the access point take place during a period of occupancy of the transmission band by one and the same station.

5. Method (1) for transmitting data packets according to Claim 1, 2 or 3, wherein the access point decrements the backoff counter values on each contention phase and suspends this decrementation as soon as a transmission in the transmission band commences.

6. Method (1) for transmitting data packets according to Claim 1 or 2, **characterized in that** it further comprises:
- a step of transmission of backoff counter values by the different stations (SM) in the signalling band.

7. Station (STA) for transmitting data packets, intended for an access network with sharing of a multi-band channel between different stations, a first band being called transmission band, a second band being called signalling band, the access to the channel by a station to transmit data of a stream being performed after the counting by a counter of a backoff value (backoff), the station comprising:
- transmission/reception means for transmitting and receiving data packets via the multi-band channel,
- a means for memorizing backoff counter values, transmitted in succession by the different stations sharing the multi-band channel, concerning their different streams,
- a means for comparing the backoff counter values received to detect identical values,
- in the case of identical values between several stations, a means for determining at least one new backoff counter value different from all the values received,
- a means for transmitting, in the signalling band, the at least one new backoff counter value to the station associated with this backoff counter.

8. Station (AP) according to the preceding claim such that it further comprises:
- a means for broadcasting in the signalling band a request for the return of a backoff counter value.

9. Computer program suitable for being on an information medium, said program comprising program instructions suitable for implementing a method for transmitting data packets implemented by a station intended for an access network with sharing of a multi-band channel between stations, according to any one of Claims 1 to 6, when said program is loaded and run in a station intended to implement the transmission method.

10. Information medium comprising programme instructions suitable for implementing a method for transmitting data packets implemented by a station intended for an access network with sharing of a multi-band channel between stations, according to any one of Claims 1 to 6, when said program is loaded and run in a station intended to implement the transmission method.
